(19) Europäisches Patentamt
European Patent Office
Office européen des brevets

(11) **EP 4 260 116 B1**

(12) **FASCICULE DE BREVET EUROPEEN**

(45) Date de publication et mention de la délivrance du brevet:
**04.02.2026 Bulletin 2026/06**

(21) Numéro de dépôt: **21836432.1**

(22) Date de dépôt: **09.12.2021**

(51) Classification Internationale des Brevets (IPC):
**G02B 21/00** *(2006.01)*  **G02B 27/58** *(2006.01)*
**G02B 21/08** *(2006.01)*

(52) Classification Coopérative des Brevets (CPC):
**G02B 21/0072; G02B 21/0032; G02B 21/0048; G02B 21/008; G02B 21/082; G02B 27/58**

(86) Numéro de dépôt international:
**PCT/EP2021/085104**

(87) Numéro de publication internationale:
**WO 2022/122981 (16.06.2022 Gazette 2022/24)**

(54) **MICROSCOPE CONFOCAL AVEC RÉALLOCATION DE PHOTONS**

KONFOKALES MIKROSKOP MIT PHOTONEN-UMVERTEILUNG

CONFOCAL MICROSCOPE WITH REALLOCATION OF PHOTONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2020 EP 20306540**

(43) Date de publication de la demande:
**18.10.2023 Bulletin 2023/42**

(73) Titulaires:
• **Centre National de la Recherche Scientifique**
**75016 Paris (FR)**
• **Institut d'Optique Graduate School**
**91127 Palaiseau Cedex (FR)**
• **UNIVERSITE DE BORDEAUX**
**33000 Bordeaux (FR)**

(72) Inventeurs:
• **AGUILAR, Alberto**
**33000 Bordeaux (FR)**
• **BON, Pierre**
**33140 Villenave d'Ornon (FR)**

(74) Mandataire: **IPAZ**
**Bâtiment Platon**
**Parc Les Algorithmes**
**91190 Saint-Aubin (FR)**

(56) Documents cités:
WO-A1-2018/226836   DE-A1- 102013 005 927
JP-A- 2011 118 070

• **ROTH STEPHAN: "Development of a new microscopy method: Optical Photon Reassignment Microscopy", 29 March 2017 (2017-03-29), XP055800240, Retrieved from the Internet <URL:https://www.db-thueringen.de/servlets/MCRFileNodeServlet/dbt_derivate_00038924/ROTH_THESIS.pdf> [retrieved on 20210430]**
• **LAROCCA FRANCESCO: "Development of Multi-modal and Super-resolved Retinal Imaging Systems", 19 April 2016 (2016-04-19), XP055800358, Retrieved from the Internet <URL:https://dukespace.lib.duke.edu/dspace/bitstream/handle/10161/12239/LaRocca_duke_0066D_13458.pdf?sequence=1> [retrieved on 20210430]**
• **YORK ANDREW G ET AL: "Instant super-resolution imaging in live cells and embryos via analog image processing", NATURE METHODS, vol. 10, no. 11, 1 November 2013 (2013-11-01), New York, pages 1122 - 1126, XP055800399, ISSN: 1548-7091, DOI: 10.1038/nmeth.2687**
• **ROBERT WITTE ET AL: "Concepts in Light Microscopy of Viruses", VIRUSES, vol. 10, no. 4, 18 April 2018 (2018-04-18), pages 202, XP055529858, DOI: 10.3390/v10040202**

- "Microscopy and Analysis", 21 September 2016, INTECH, ISBN: 978-953-51-2579-2, article LONGCHAO CHEN ET AL, XP055499369, DOI: 10.5772/63192
- AGUILAR ALBERTO ET AL: "Label-free super-resolution imaging below 90-nm using photon-reassignment", OPEN RESEARCH EUROPE, 24 March 2021 (2021-03-24), pages 3, XP055905081, Retrieved from the Internet <URL:https://openreseurope.s3.amazonaws.com/manuscripts/14136/3baa3f0e-dce7-4f3e-874e-e2315beeebad_13066_-_pierre_bon.pdf?doi=10.12688/openreseurope.13066.1&numberOfBrowsableCollections=24&numberOfBrowsableInstitutionalCollections=0&numberOfBrowsableGateways=8> [retrieved on 20220324], DOI: 10.12688/openreseurope.13066.1

**Description**

L'invention relève du domaine de la microscopie optique.

La microscopie optique joue un rôle essentiel en biologie car elle permet d'observer des échantillons vivants à un débit élevé contrairement, par exemple, à la microscopie électronique qui nécessite des opérations de préparation complexes et incompatibles avec la préservation de la vie. Cependant, son pouvoir de résolution est nécessairement limité par la diffraction de la lumière. Conformément à la théorie de Abbe, pour un microscope optique conventionnel la résolution maximale d est donnée par

$$d = \frac{\lambda}{2\,ON}$$

où $\lambda$ est la longueur d'onde de la lumière utilisée (entre 380 nm et 780 nm pour la lumière visible) et ON l'ouverture numérique qui peut difficilement dépasser une valeur de 1,4 pour des échantillons biologiques. Il s'ensuit que la résolution en lumière visible ne peut pas dépasser 135 nm, ce qui ne convient pas pour l'observation de très petites structures telles des particules virales.

Des techniques dites de « superrésolution » permettent de dépasser la limite de résolution de Abbe en exploitant des marqueurs fluorescents et/ou des effets non-linéaires. Ces techniques sont complexes à mettre en œuvre.

Par ailleurs, comme les objets biologiques sont par nature tridimensionnels, il est également nécessaire d'obtenir une résolution spatiale élevée dans une direction axiale (la limite de Abbe concerne résolution latérale, dans un plan perpendiculaire à l'axe optique). La microscopie confocale permet d'obtenir des images avec une très faible profondeur de champ (de l'ordre de quelques centaines de nanomètre), et donc de réaliser un « sectionnement » de l'échantillon permettant d'accéder à sa structure tridimensionnelle. Cette technique est le plus souvent associée à l'utilisation de marqueurs fluorescents, mais il est également possible de l'utiliser en réflectance, sans marqueurs.

Un microscope confocal utilise une source d'illumination ponctuelle, dont une image est projetée sur l'échantillon à observer au moyen d'un objectif. La lumière issue de l'échantillon (lumière rétrodiffusée dans le cas d'un microscope confocal à réflectance ; émission fluorescente lorsqu'un marqueur fluorescent est utilisé) est focalisée sur un sténopé optiquement conjugué à la source ponctuelle, puis détectée par exemple au moyen d'un photomultiplicateur. La fonction du sténopé est de supprimer le rayonnement qui ne provient pas du plan focal de l'objectif, réalisant ainsi le sectionnement optique. Une image de l'échantillon est obtenue point par point, par balayage. Plus précisément, un balayage bidimensionnel, dans les deux directions perpendiculaires à l'axe optique, permet d'obtenir une image d'une tranche de l'échantillon centrée autour du plan focal de l'objectif. En y ajoutant un balayage axial de ce plan focal on obtient une image tridimensionnelle.

L'épaisseur de la tranche est d'autant plus petite, et donc la résolution axiale est d'autant meilleure, que le diamètre du sténopé est petit, mais le gain est faible lorsqu'on descend au-dessous de 1 unité d'Airy (UA). L'unité de Airy est le diamètre de la tache d'Airy du microscope, et vaut $\dfrac{\lambda}{2\,ON}$ .

La microscopie confocale permet un gain de résolution latérale, par rapport à la limite de Abbe, pouvant aller en théorie jusqu'à 30%, en utilisant un sténopé de diamètre inférieur à 1 UA. Cependant cela est obtenu au prix d'une dégradation de l'écart signal à bruit.

La technique de réallocation de photons, proposée pour la première fois dans (Sheppard 1988) permet d'améliorer la résolution latérale d'un microscope confocal d'un facteur 2 en principe. L'idée à la base de cette technique est de remplacer le photomultiplicateur, ou plus généralement le détecteur de rayonnement ponctuel, par un détecteur matriciel qui permet d'acquérir une image élémentaire pour chaque point d'acquisition. L'image est ensuite redimensionnée (idéalement, réduite d'un facteur 2) par des moyens numériques ou optiques avant de passer au point de balayage suivant. L'image finale est obtenue en intégrant les différentes images de balayages acquises successivement, chacune décalée d'un pas de balayage par rapport à l'image précédente.

Une mise en œuvre purement optique de la technique de réallocation de photons est décrite dans (York 2013), (De Luca 2013), (Curd 2015) et (Roth 2017). Elle consiste à appliquer au faisceau d'illumination un premier balayage angulaire, appliquer un balayage angulaire inverse au faisceau issu de l'échantillon, puis appliquer à ce même faisceau issu de l'échantillon un deuxième balayage angulaire, synchronisé avec le premier balayage. Le deuxième balayage angulaire présente une amplitude normalisée par rapport à la section du faisceau plus grande, idéalement d'un facteur deux, que le premier balayage. « Normalisée par rapport à la section du faisceau » signifie que si $\alpha$ est le rapport entre l'amplitude du second balayage angulaire et celle du premier balayage angulaire et M le rapport entre la section du faisceau issu de l'échantillon et celle du faisceau d'éclairage, c'est la grandeur $\alpha/M$ qui doit être supérieure à 1 et idéalement égale à 2.

Comme en microscopie confocale classique, il est possible de paralléliser l'acquisition en utilisant une matrice de sténopés et des matrices de microlentilles voir par exemple l'article précité (York 2013).

La réallocation de photons a été appliquée en particulier à la microscopie confocale de fluorescence, voir par exemple les articles précités (York 2013), (De Luca 2013) et (Curd 2015), où un gain en résolution latérale d'un facteur 1,5 a été constaté. A la connaissance de l'inventeur, la seule application en réflectance de la réallocation de photons a été décrite dans (DuBose 2019). Dans cet article il n'était cependant pas question d'un microscope, mais d'un ophtalmoscope, dans lequel l'objectif est remplacé par le cristallin de l'œil d'un patient, présentant donc une faible ouverture numérique, et par conséquent une résolution latérale de l'ordre des dizaines de micromètres.

L'invention vise à procurer un microscope confocal à balayage présentant une résolution améliorée en trois dimensions (latérale et axiale). Conformément à l'invention, ce but est atteint grâce à l'utilisation, en imagerie cohérente, d'un sténopé confocal présentant un diamètre (ou, plus généralement, une plus grande dimension latérale) compris entre 2 et 4 unités d'Airy, et idéalement égal à 3 unités d'Airy. Le présent inventeur s'est rendu compte que, dans un fonctionnement en imagerie cohérente, la résolution latérale augmente avec l'ouverture du sténopé jusqu'à doubler par rapport à la limite de Abbe pour un diamètre de 3 unités d'Airy. Par contre, dans un fonctionnement en fluorescence, la résolution latérale est indépendant du diamètre du sténopé. Par imagerie cohérente on entend un régime dans lequel les photons détectés sont des photons d'éclairage qui n'ont subi que des diffusions élastiques par l'échantillon et les systèmes optiques du microscope ; il peut s'agit par exemple d'imagerie à réflectance (cas considéré en détail dans la suite) ou à transmission. L'imagerie par fluorescence ou diffusion Raman, par contre, est considérée incohérente car les photons d'illumination subissent des diffusions inélastiques.

L'utilisation d'un sténopé de diamètre égal à 3 unités d'Airy optimise en outre le rejet du fond (qui est toutefois dégradé d'environ 30% par rapport au cas d'un microscope confocal sens réallocation de photons et avec un sténopé de 1 UA). La notion de « rejet de fond » est définie précisément dans (Sandison 1995).

Par ailleurs, l'inventeur a découvert que, dans ces conditions, la résolution axiale est augmentée d'un facteur 1,5 par rapport au cas d'un microscope confocal conventionnel.

Au final, en utilisant un éclairage de longueur d'onde égale à 445 nm et on objectif à immersion avec ON=1,3 il est possible d'obtenir une résolution spatiale de (86 x 86 x 248) $nm^3$. Et cela sans besoin de marquage fluorescent, ce qui rend l'application de la technique plus simple et plus générale.

Un objet de l'invention est donc un microscope confocal à balayage avec réallocation de photons comprenant :

Une source de lumière configurée pour générer au moins un faisceau lumineux d'éclairage spatialement cohérent à une longueur d'onde d'éclairage ;
Un premier système optique configuré pour appliquer un balayage angulaire audit faisceau lumineux d'éclairage ;
Au moins un objectif de microscope configuré pour recevoir en entrée le faisceau lumineux d'éclairage en sortie du premier système optique et le focaliser sur un échantillon, et pour collecter et collimater un faisceau lumineux diffusé élastiquement par ledit échantillon, dit faisceau de signal ;
Un deuxième système optique, pouvant coïncider en tout ou en partie avec le premier système optique, configuré pour recevoir en entrée le faisceau signal collimaté par l'objectif de microscope, lui appliquer un balayage angulaire opposé à celui appliqué au faisceau lumineux d'éclairage et le focaliser dans un premier plan focal ;
Un sténopé agencé dans ledit premier plan focal ;
Un capteur matriciel d'images agencé dans le deuxième plan focal ; et
Un moyen de réallocation photons coopérant avec le capteur matriciel d'images pour reconstruire une image de l'échantillon ;

caractérisé en ce que :

L'objectif de microscope et le deuxième système optique sont configurés pour focaliser sur le capteur matriciel d'images ledit faisceau signal à la longueur d'onde d'éclairage ; et en ce que
Le sténopé présente un diamètre, ou une plus grande dimension latérale, compris entre 2 et 4 unités d'Airy.

Selon des modes de réalisation particuliers d'un tel microscope confocal à balayage :

- Au moins le deuxième système optique peut comprendre une lame séparatrice pour séparer le faisceau signal du faisceau lumineux d'éclairage.
- La source de lumière peut être adaptée pour émettre un faisceau lumineux d'éclairage bleu, violet ou dans l'ultraviolet proche.
- La source de lumière peut être un laser.
- L'objectif de microscope peut être un objectif à immersion présentant une ouverture numérique supérieure ou égale à 1.

- Le moyen de réallocation photons comprend un troisième système optique configuré pour collecter le faisceau signal ayant traversé le sténopé, le collimater et lui appliquer un balayage angulaire synchronisé avec celui appliqué au faisceau lumineux d'éclairage et tel que le produit de son amplitude par la section du faisceau lumineux collimaté dans le troisième système optique est plus grand que le produit de l'amplitude du balayage appliqué par le deuxième système optique par la section du faisceau lumineux collimaté dans le deuxième système optique, et le focaliser dans un deuxième plan focal ; l'ensemble constitué par l'objectif de microscope, le deuxième système optique et le troisième système optique étant configuré pour focaliser sur le capteur matriciel d'images ledit faisceau signal à la longueur d'onde d'éclairage.
- Le troisième système optique peut être configuré pour appliquer au faisceau signal un balayage angulaire tel que l'amplitude dudit balayage multipliée par la section du faisceau est comprise entre 1,8 et 2,2 fois le produit de l'amplitude du balayage angulaire appliqué au faisceau lumineux d'éclairage par le premier système optique par la section dudit faisceau.

Le microscope confocal à balayage peut être configuré pour un fonctionnement en réflectance et :

- Le premier système optique peut comprendre une première lentille pour focaliser le faisceau lumineux d'éclairage, un sténopé agencé dans le plan focal de ladite première lentille pour effectuer un filtrage spatial du faisceau lumineux d'éclairage, une lame séparatrice pour réfléchir une portion dudit faisceau, une deuxième lentille pour collimater ladite portion du faisceau d'éclairage, un premier miroir oscillant ou système de miroirs oscillants pour lui appliquer ledit balayage angulaire et un système afocal comprenant une troisième et une quatrième lentille ;
- Le deuxième système optique peut comprendre ledit système afocal, ledit premier miroir oscillant ou système de miroirs oscillants, ladite deuxième lentille et ladite lame séparatrice, cette dernière étant configurée pour transmettre une portion du faisceau signal, rétrodiffusé par l'échantillon ; et
- Le troisième système optique peut comprendre une cinquième lentille pour collimater le faisceau signal ayant traversé le sténopé, un deuxième miroir oscillant ou système de miroirs oscillants pour lui appliquer ledit balayage angulaire synchronisé avec celui appliqué au faisceau lumineux d'éclairage et une sixième lentille pour le focaliser dans le deuxième plan focal.

- La source de lumière peut être configurée pour générer une pluralité de dits faisceaux lumineux d'éclairage en parallèle se propageant à travers du premier système optique, moyennant quoi l'objectif de microscope collecte une pluralité de faisceaux signaux respectifs, qui se propageant ensuite le long dudit deuxième système optique, et comprenant une matrice de sténopés agencés dans ledit deuxième plan focal, un pour chaque dit faisceau lumineux rétrodiffusé.

Dans ce cas, le microscope confocal à balayage peut être configuré pour un fonctionnement en réflectance et :

- La source de lumière peut comprendre un premier réseau de microlentilles pour générer et focaliser ladite pluralité de faisceaux lumineux d'éclairage ;
- Le microscope confocal à balayage peut comprendre au moins un miroir oscillant présentant une face avant et une face arrière réfléchissantes, la face avant faisant partie du premier et du deuxième système optique et la face arrière faisant partie du troisième système optique ; et
- Le troisième système optique peut comprendre un second réseau de microlentilles pour augmenter la section des faisceaux lumineux rétrodiffusés incidents sur la face arrière du miroir oscillant d'un facteur compris entre 1,8 et 2,2.

Un autre objet de l'invention est l'utilisation d'un tel microscope confocal à balayage pour l'observation de particules virales en suspension.

Encore un autre objet de l'invention est un procédé d'observation d'un échantillon comprenant les étapes consistant à :

- Générer au moins un faisceau lumineux d'éclairage spatialement cohérent et collimaté à une longueur d'onde d'éclairage ;
- Lui appliquer un balayage angulaire ;
- Le focaliser sur l'échantillon au moyen d'un objectif de microscope ;
- Collecter, au moyen dudit ou d'un autre objectif de microscope, un faisceau lumineux diffusé élastiquement par l'échantillon à ladite longueur d'onde d'éclairage, dit faisceau signal ;
- Appliquer au faisceau signal un balayage angulaire opposé à celui appliqué au faisceau lumineux d'éclairage et le focaliser dans un premier plan focal ;

- Effectuer un filtrage spatial du faisceau signal au moyen d'un sténopé agencé dans ledit premier plan focal, le sténopé présentant un diamètre, ou une plus grande dimension latérale, compris entre 2 et 4 unités d'Airy ;
- Collecter le faisceau signal ayant traversé le sténopé, le collimater et lui appliquer un balayage angulaire synchronisé avec celui appliqué au faisceau lumineux d'éclairage et tel que le produit de son amplitude par la section du faisceau de signal est plus grand que le produit de l'amplitude du balayage angulaire appliqué au faisceau lumineux d'éclairage par son diamètre et le focaliser dans un deuxième plan focal ; et
- Détecter le faisceau signal au moyen d'un capteur matriciel d'images agencé dans le deuxième plan focal.

Selon un mode de réalisation non revendiqué, un procédé d'observation d'un échantillon peut comprendre les étapes consistant à :

Générer au moins un faisceau lumineux d'éclairage (FE) spatialement cohérent et collimaté à une longueur d'onde d'éclairage ;

Lui appliquer un balayage angulaire ;

Le focaliser sur l'échantillon au moyen d'un objectif de microscope ;

Collecter, au moyen dudit ou d'un autre objectif de microscope, un faisceau lumineux diffusé élastiquement par l'échantillon à ladite longueur d'onde d'éclairage, dit faisceau signal ;

Appliquer au faisceau signal un balayage angulaire opposé à celui appliqué au faisceau lumineux d'éclairage et le focaliser dans un premier plan focal ;

Effectuer un filtrage spatial du faisceau signal au moyen d'un sténopé agencé dans ledit premier plan focal, le sténopé présentant un diamètre, ou une plus grande dimension latérale, compris entre 2 et 4 unités d'Airy ;

Détecter le faisceau signal ayant traversé le sténopé au moyen d'un capteur matriciel d'images agencé dans le deuxième plan focal, dont la cadence d'acquisition est synchrone avec le balayage angulaire du faisceau lumineux d'éclairage ; et

Appliquer aux images acquises par le capteur matriciel d'images un traitement numérique de réallocation de photons.

D'autres caractéristiques, détails et avantages de l'invention ressortiront à la lecture de la description faite en référence aux figures annexées donnés à titre d'exemple et qui représentent, respectivement :

[Fig.1], un schéma d'un microscope confocal avec réallocation de photons selon un premier mode de réalisation de l'invention ;

[Fig. 2], des graphiques illustrant comment les performances du microscope confocal de la [Fig. 1] dépendent du diamètre du sténopé confocal ;

[Fig. 3],

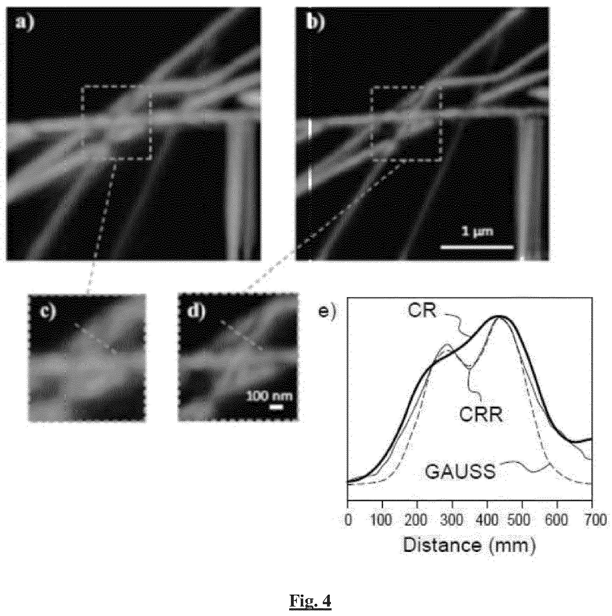

[Fig. 4] et

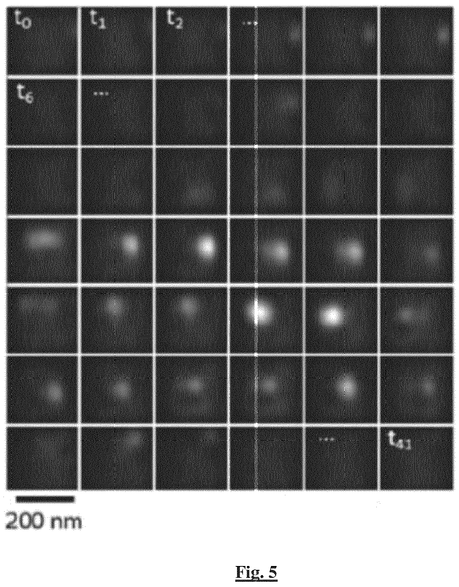

[Fig. 5], des résultats expérimentaux démontrant un effet technique de l'invention;

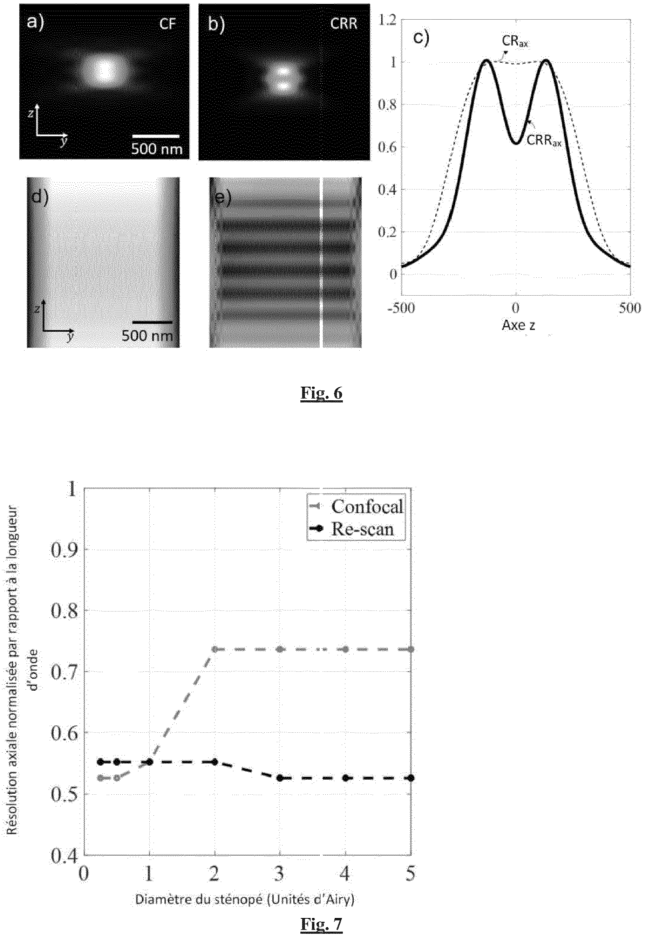

[Fig. 6] et [Fig. 7] des résultats de simulations numériques démontrant un autre effet technique de l'invention ;

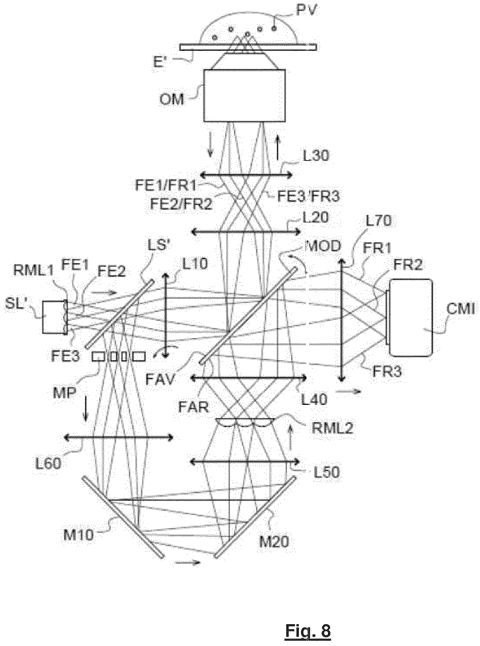

[Fig. 8], un schéma d'un microscope confocal avec réallocation de photons selon un second mode de réalisation de l'invention ; et

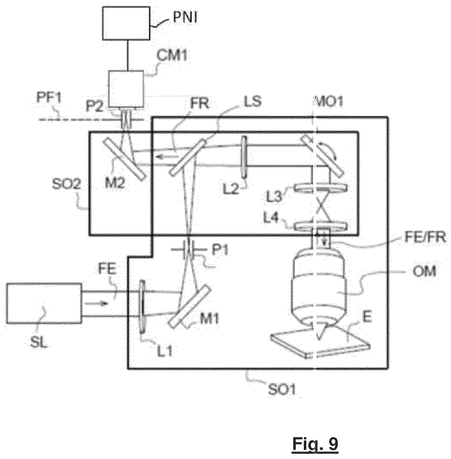

[Fig. 9], un schéma d'un microscope confocal avec réallocation de photons selon un troisième mode de réalisation de l'invention.

Comme expliqué plus haut, la technique de réallocation de photons consiste à enregistrer l'image d'un échantillon à travers un sténopé (« pinhole » en anglais) lorsque l'échantillon est illuminé par un faisceau lumineux très focalisé. Cette image prise à travers le sténopé est positionnée à un endroit spécifique d'une caméra d'acquisition avec une séparation entre deux points du balayage de l'échantillon s et une dé-magnification M. Le signal enregistré par la caméra $I(\vec{x_s}, \vec{x_d})$ où $\vec{x_s}$ représente les coordonnées dans le plan de l'échantillon et $\vec{x_d}$ les coordonnées dans le plan du détecteur, est donné par

$$I(\vec{x_s}, \vec{x_d}) = \iint H_e\left(\vec{x'}\right) U(\vec{x'} - \vec{x_s}) H_d(\vec{x'} - \vec{x_d}) d^2\vec{x'} \tag{1}$$

où $H_e$ est la fonction d'étalement d'illumination (ou excitation), $H_d$ la fonction d'étalement de détection et U le champ diffusé par l'échantillon.

L'équation (1) présuppose un balayage par déplacement de l'échantillon, alors qu'il est plus pratique de maintenir l'échantillon fixe et déplacer le faisceau d'illumination. Mathématiquement cela correspond au changement de coordonnées $\vec{x_s} = -\vec{x_1}$, $\vec{x_d} = \vec{x_2} - \vec{x_1}$, $\vec{x'} = \vec{x} - \vec{x_1}$, ce qui donne

$$I(\vec{x_1}, \vec{x_2}) = \iint H_e(\vec{x} - \vec{x_1}) H_d(\vec{x} - \vec{x_2}) U(\vec{x}) d^2\vec{x} \tag{2}$$

Si le détecteur est suffisamment étendu par rapport à la taille du sténopé, il est possible de négliger le facteur de pondération de ce dernier. Si on introduit par ailleurs un facteur de démagnification M on peut écrire $\vec{x_r} = (1 - M)\vec{x_1} - M\vec{x_2}$ et (2) devient

$$I(\vec{x_r}) = \iint \iint H_e(\vec{x} - \vec{x_r} - M\vec{x_d}) H_d(\vec{x} - \vec{x_r} - (M - 1)\vec{x_d}) U(\vec{x}) d^2\vec{x} d^2\vec{x_d} \tag{3}$$

La fonction de transfert optique du système, $C(\vec{k})$, $\vec{k}$ désignant les coordonnées de fréquence spatiale, peut être écrite :

$$C(\vec{k}) = C_e\big[(M - 1)\vec{k}\big] C_d\big[M\vec{k}\big] \tag{4}$$

avec $C_e$, $C_d$ les fonctions de transfert optiques d'illumination et détection, respectivement. Idéalement $C_e(\vec{k}) = C_e(\vec{k}) = 1$ si

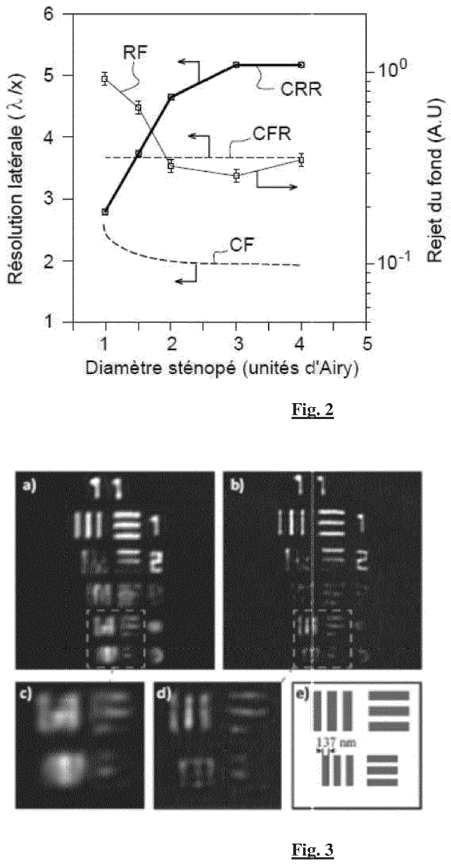

$0 < k \leq k_0 = \dfrac{2\pi}{\lambda}$, 0 autrement. On remarque que le support de $C_e(\vec{k})$ présente un rayon proportionnel à 1/(M-1). Il a été démontré dans (Sheppard 1988) et (DuBose 2019) que la fréquence de coupure maximale de la fonction de transfert optique prend sa valeur maximale $k_{max} = 2k_0$ pour M=1/2, ce qui correspond à une magnification d'un facteur 2, conduisant à un doublement de la résolution latérale par rapport à la microscopie confocale classique. Cette magnification peut être obtenue par un re-balayage d'amplitude égale à 2 fois celle qui serait nécessaire pour compenser le balayage de l'échantillon par la tache d'éclairage. En variante, le re-balayage pourrait avoir une amplitude égale à celle nécessaire pour compenser le balayage de l'échantillon par la tache d'éclairage, la magnification étant fournie par un système de lentilles. Comme cela sera discuté plus loin en référence à la figure 2, des solutions intermédiaires sont également possibles ; plus généralement, ce qui compte est que le produit entre l'amplitude du re-balayage par rapport à celle du balayage d'illumination et la magnification optique soit approximativement égal à 2.

D'une manière générale, un microscope confocal avec réallocation de photons selon l'invention comprend : une source lumineuse ; un premier système optique coopérant avec la source lumineuse un objectif pour balayer la surface d'un échantillon avec un faisceau lumineux focalisé ; un deuxième système optique pour recueillir la lumière rétrodiffusée ou transmise par l'échantillon, compenser la déflexion angulaire introduite pour effectuer le balayage et la focaliser ; un sténopé dans le plan focal du deuxième système optique pour réaliser un filtrage confocal ; un troisième système optique pour appliquer un « re-balayage » au faisceau lumineux issu du sténopé et le focaliser sur une caméra. Les différents systèmes optiques peuvent coïncider en partie, ce qui permet de limiter le nombre de composants optiques.

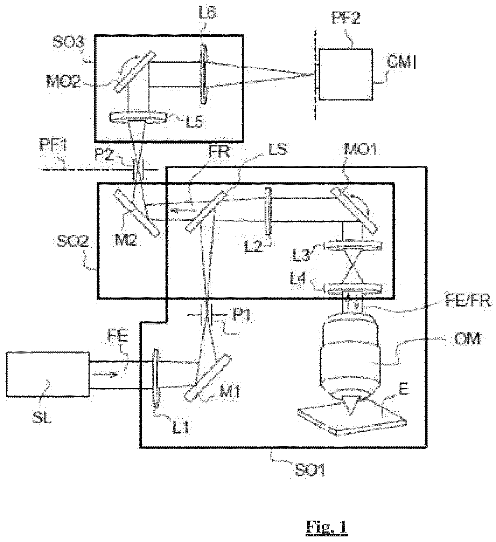

La [Fig. 1] montre le schéma optique d'un microscope confocal avec réallocation de photons selon un premier mode de réalisation de l'invention.

La source de lumière SL est un laser émettant un faisceau lumineux FE (faisceau d'éclairage) de longueur d'onde $\lambda$=445 nm. Le faisceau FE est focalisé par une première lentille convergente L1 (longueur focale 200 mm) et purifié spatialement par un premier sténopé P1 avec un diamètre de 50 $\mu$m situé dans le plan focal de la lentille.

Le faisceau d'éclairage FE filtré spatialement est réfléchi par une lame séparatrice LS (transmission 50% - réflexion 50%) et collimaté par une deuxième lentille convergente L2 (longueur focale 200 mm). Un premier système de deux miroirs oscillants (un seul, MO1, est représenté dans un souci de simplicité), par exemple de type galvanomètre, impartit au faisceau FE une déflexion variable dans le temps, réalisant un balayage en deux dimensions. Le faisceau FE ainsi défléchi est focalisé sur un échantillon E par un objectif de microscope OM (objectif apochomatique à immersion dans huile de silicone, magnification 60x, ouverture numérique ON=1,3) de telle sorte que la tâche focale - dont le diamètre est limité par diffraction - balaye la surface de l'échantillon. Si l'échantillon est transparent ou semi-transparent, le point de focalisation peut être situé en dessous de la surface, à une profondeur qui peut être variée en déplaçant axialement l'objectif ou l'échantillon, ce qui permet l'obtention d'images tridimensionnelles par tomographie.

Un système afocal constitué des lentilles convergentes L3, L4 assure une relation de conjugaison optique entre la pupille de l'objectif et le point milieu des deux miroirs oscillants (ou le miroir oscillant unique MO1) ; typiquement, la distance entre les deux miroirs oscillants peut être négligée par rapport à la longueur focale de L3. Tous les composants optiques compris entre la lentille L1 et l'objectif OM - y compris un miroir M1, non essentiel, qui dévie le faisceau FE en amont du sténopé P1 pour rendre le dispositif plus compact - forment un premier système optique, ou système optique d'éclairage, SO1.

La lumière rétrodiffusée par l'échantillon est collectée par l'objectif OM qui forme un faisceau de signal FR se propageant suivant - à rebours - le même chemin optique que le faisceau d'éclairage jusqu'à la lame séparatrice LS. Ce chemin optique inclut la paire de miroirs oscillants MO1 qui compense la déflexion variable dans le temps impartie au faisceau d'éclairage pour balayer l'échantillon. La composante de FR réfléchie par la lame LS est perdue, celle qui la traverse est destinée à être détectée et est réfléchie à 90° par un miroir M2 (non essentiel, visant uniquement à rendre le montage plus compact). L'ensemble L4, L3, MO1, L2, LS, M2 forme un deuxième système optique, ou système optique de collecte, SO2. On remarque que SO2 coïncide en partie avec SO1 car le microscope fonctionne en réflectance.

La lentille L2 a une double fonction : collimater le faisceau d'éclairage, qui diverge après avoir été focalisé par L1 et filtré spatialement par P1, et focaliser le faisceau signal FR qui sort collimaté de l'objectif OM et du système afocal L3, L4. Un deuxième sténopé P2 est placé dans le plan focal PF1 de la lentille L2 où le faisceau signal FR est focalisé. Contrairement au sténopé P1, P2 est une caractéristique essentielle de l'invention et le dimensionnement de son diamètre (ou, plus généralement, de sa plus grande dimension latérale, au cas où il ne serait pas circulaire) impacte fortement les performances du microscope. Cela sera discuté en détail plus loin à l'aide de la [Fig. 2].

Il est important de souligner que la figure n'est pas à l'échelle. En réalité, la distance entre le système de miroirs oscillants LO1 et L3 doit être égale à la distance entre L3 et le plan focal PF1. Par ailleurs, les lentilles L2 et L5 forment un second système afocal qui, dans le mode de réalisation de la [Fig. 1], présente un grossissement unitaire.

Le faisceau FR ayant traversé le sténopé P2, divergeant, est collimaté par une lentille convergente L5 (longueur focale 200 mm) et dirigé vers un second système de deux miroirs oscillants (un seul, MO2, est représenté dans un souci de simplicité), par exemple de type galvanomètre. Ce deuxième système de miroirs oscillants impartit au faisceau FR une déflexion variable dans le temps, réalisant un balayage en deux dimensions à l'origine de la réallocation des photons. Cette déflexion est synchrone de celle impartie au faisceau FR et présente une amplitude $\alpha_2$ supérieure à l'amplitude $\alpha_1$ de la déflexion impartie par MO1.

Plus précisément, la déflexion impartie par le second système de miroirs oscillants MO2 est idéalement supérieure d'un facteur égal à 2 (ou plus généralement compris entre 1,8 et 2,2) à celle imparti par le premier système de miroirs oscillants MO1.

D'une manière plus générale, le grossissement du système afocal L2 - L5 peut prendre une valeur G différente de 1, auquel cas la section du faisceau FR lorsqu'il est incident sur MO2 est supérieure d'un facteur M de la section du même faisceau lorsqu'il est incident sur MO1. Dans ce cas, c'est le produit $M\alpha_2$ qui doit être supérieur, et idéalement double, de $\alpha_1$.

Le faisceau défléchi par le système de miroirs oscillants MO2 est focalisé par une lentille convergente L6 (longueur focale 200 mm) dans un deuxième plan focal PF2.

L'ensemble L5, MO2, L6 forme un troisième système optique, ou système optique de réallocation de photons, SO3.

Un capteur matriciel d'images CMI est agencé dans le plan focal PF2 de la lentille L6. Son temps d'intégration est supérieur ou égal à une demi-période de balayage du système de miroirs oscillants MO2, ce qui permet de calculer de manière analogique les intégrales de l'équation (3). En variante, le temps d'intégration peut être inférieur, et la cadence d'acquisition d'images plus élevée, mais dans ce cas il est nécessaire de réaliser une intégration numérique après l'acquisition.

La [Fig. 2] illustre la dépendance de certains critères de performances du microscope de la [Fig. 1] (mais la validité des résultats est plus générale) du diamètre du sténopé P2, et permet de les comparer à celles obtenues au moyen d'autres techniques de microscopie confocale. Le diamètre de P2 est exprimé en unités d'Airy UA. Comme expliqué plus haut, l'unité de Airy est le diamètre de la tache d'Airy du microscope, et vaut $\dfrac{\lambda}{2\,ON}$, ON étant l'ouverture numérique de l'objectif OM et $\lambda$ la longueur d'onde considérée.

Les courbes CRR, CFR et CF représentent, respectivement, la résolution latérale du microscope de la [Fig. 1], d'un microscope confocal à réallocation de photons incohérent (par exemple, à fluorescence) et d'un microscope confocal conventionnel. Plus précisément, les courbes montrent comment le paramètre « x » dépend du diamètre du sténopé, « x » étant tel que la résolution latérale est donné par $\dfrac{\lambda}{x}$ . On remarque que :

- Dans le cas d'un microscope confocal classique (courbe CF), x augmente lorsque le diamètre du sténopé diminue ; pour cette raison, on choisit généralement un sténopé dont le diamètre vaut environ 1 UA.
- Dans le cas d'un microscope confocal incohérent à réallocation de photons (courbe CFR) la résolution latérale est indépendante du diamètre du sténopé et est meilleure d'un facteur 1,5 environ à celle du microscope confocal classique.
- Dans le cas d'un microscope confocal cohérent à réallocation de photons, selon l'invention (courbe CRR), la résolution latérale s'améliore lorsque le diamètre du sténopé augmente, jusqu'à plafonner lors que ledit diamètre atteint 3 UA. A partir de 2 UA environ, la résolution latérale est significativement meilleure qu'en microscopie cohérente. En conditions optimales (3UA), la résolution latérale est deux fois meilleure qu'en microscopie confocale classique.

La courbe RF illustre la variation du rejet du fond en fonction du diamètre du sténopé (cette variation est la même dans les trois techniques considérées ci-dessus. Le rejet du fond baisse entre 1 et 2 UA, puis se stabilise entre 2 et 4 UA à une valeur inférieure d'environ 30% à celle obtenue pour un diamètre de 1 UA, avant de baisser fortement au-delà de 4 UA (non représenté). La légère remontée entre 3 et 4 UA est vraisemblablement un artefact.

En conclusion, pour des diamètres de sténopé compris entre 2 et 4 UA, l'invention permet d'obtenir un doublement de la résolution latérale par rapport à un microscope confocal sans réallocation de photons et un sténopé ouvert à 1 UA, au prix d'une dégradation contenue du rejet de fond.

L'amélioration de résolution latérale obtenue grâce à l'invention a été démontrée expérimentalement.

La [Fig. 3] montre des images d'une mire de résolution USAF (11e groupe d'éléments) acquises avec le microscope de la [Fig. 1] (panneaux b et d, ce dernier étant un agrandissement de la zone entourée par une ligne pointillée dans le panneau b) et avec un microscope confocal sans réallocation de photons utilisant la même source de lumière et le même objectif (panneaux a et c). Ces dernières sont beaucoup plus nettes. Le panneau d illustre le motif de la mire. Les images ont été obtenues sans déconvolution.

La [Fig. 4] montre des images de nanotiges d'argent (diamètre : 90 nm +/- 5 nm ; longueur : quelques dizaines de micromètres) immergées dans une huile d'accord d'indice de réfraction, acquises avec le microscope de la [Fig. 1] (panneaux b et d, ce dernier étant un agrandissement de la zone entourée par une ligne pointillée dans le panneau b) et avec un microscope confocal sans réallocation de photons utilisant la même source de lumière et le même objectif (panneaux a et c). Ces dernières sont beaucoup plus nettes. Le panneau d illustre les profils extraits des panneaux c et d le long des lignes pointillées : la courbe CRR correspond au panneau d et permet de distinguer deux nanotiges, qui ne sont pas résolues par la courbe CR correspondant au panneau c. La courbe GAUSS est un fit gaussien de CRR et permet d'estimer les diamètres des nanotiges : les largeurs à mi-hauteur des deux gaussiennes sont 92,6 nm et 91,2 nm, ce qui est cohérent avec les valeurs attendues.

Un microscope selon l'invention peut être utilisé, entre autres, pour détecter des virus. La [Fig. 5] montre des images de particules de silice d'environ 100 nm de diamètre - donc comparables à des particules virales tant en termes de diamètre que d'indice de réfraction - en diffusion libre dans une solution aqueuse. Les images ont été acquises au moyen d'un microscope du type de la [Fig. 1] mais avec éclairage à une longueur d'onde de 400 nm. Les différentes images correspondent à des instants successifs, espacés de 4 s. Le diamètre des particules, mesuré sur des images au point, est de 105 nm.

L'amélioration de la résolution axiale a été démontrée au moyen de simulations numériques. Les panneaux a et b de la [Fig. 6 ] montrent deux images de deux billes de dimensions sub-micrométrique superposées. Alors que dans le cas de l'imagerie confocale classique (panneau a) les images des deux billes sont confondues, on arrive à les distinguer par la méthode de l'invention, avec un sténopé de diamètre égal à 3 UA (longueur d'onde d'éclairage : 455 nm ; objectif d'ouverture numérique 1,3). Le panneau c de la [Fig. 6] est un graphique de l'intensité mesuré le long d'un axe z qui passe par le centre des deux billes (courbes $CF_{ax}$ pour la microscopie confocale classique et $CRR_{ax}$ pour la méthode de l'invention). Cela confirme que ce qu'on voit sur le panneau b est bien une amélioration de la résolution et non un effet d'aliasing. Les panneaux d et e montrent des images d'une structure périodique orientée axialement ; la périodicité est visible sur l'image du panneau e, obtenu par la méthode de l'invention, mais pas sur celle du panneau d, correspondant à la microscopie confocale classique.

La [Fig. 7] illustre la dépendance de la résolution axiale du diamètre du sténopé pour la microscopie confocale classique (trait clair « Confocal ») et pour la méthode selon l'invention (trait foncé « Re-scan » »). On peut voir que, dans le cas de l'invention, la résolution axiale dépend faiblement du diamètre du sténopé, bien qu'elle s'améliore légèrement pour des diamètres supérieurs à 2 UA. En outre, pour un diamètre de sténopé supérieur ou égal à 1 UA, l'invention permet d'atteindre une résolution axiale sensiblement meilleure que la microscopie confocale classique.

Le microscope de la [Fig. 1] présente un champ de vue limité - ou nécessite de temps d'acquisition longs - car il utilise un seul faisceau focalisé. La [Fig. 8] illustre un mode de réalisation alternatif qui permet de surmonter cette limitation par recours à une parallélisation massive. Ce montage utilise une matrice de microlentilles pour créer une série de points sources. Cela permet de paralléliser la mesure dans le plan de l'échantillon pour augmenter la vitesse (on ne scanne que la toute petite région entre 2 points de mesure) tout en conservant un large champ de vue. L'image de chacun des points sources est filtrée au moyen d'une matrice de trous de filtrage. Afin d'augmenter la résolution latérale d'un facteur 2, chacun des points est soumis à un re-balayage avec une réduction d'un facteur 2 de sa taille au moyen d'une deuxième matrice de microlentilles. Cette approche permet une imagerie tendant vers le kHz sur des champs de vue d'au moins $50\times50\,\mu m^2$ en parallélisant 50x50 points de mesure dans le champ (1 point de mesure confocal tous les 1 $\mu m$ dans l'échantillon) et une résolution latérale meilleure que 100 nm tout en restant dans la gamme d'imagerie des longueurs d'onde visibles ou proche UV.

Plus précisément, l'appareil de la [Fig. 8] comprend une source de lumière SL' (par exemple, mais pas nécessairement un laser) équipée d'une première matrice de microlentilles RML1 qui génère une pluralité de faisceaux d'éclairage FE1, FE2, FE3 focalisés (seulement trois sont représentés, mais il s'agira typiquement d'une matrice bidimensionnelle de plusieurs centaines de faisceaux). Ces faisceaux traversent une lame séparatrice LS' puis, devenus divergents, sont refocalisés par une lentille convergent L10 sur la face avant FAV d'un miroir oscillant MOD réfléchissant sur ses deux faces ; il peut par exemple s'agir d'un miroir résonnant pour augmenter la vitesse de balayage afin de « figer » le mouvement des particules en suspension, dans le cas d'une application à la détection de virus. Le balayage dans l'autre direction est effectué avec une vitesse moindre, pour réaliser un trajet « en serpentin » du point focal ; il peut donc être obtenu au moyen d'un miroir galvanométrique également réfléchissant des 2 côtés (non représenté).

Les faisceaux réfléchis par les miroirs oscillants sont focalisés sur un échantillon E' (une goutte de solution aqueuse contenant en suspension des particules virales PV, déposée sur une lame de microscope) par un objectif de microscope OM (objectif apochomatique à immersion dans huile de silicone, magnification 60x, ouverture numérique ON=1,3) de telle sorte que la tâche focale - dont le diamètre est limité par diffraction - balaye la surface de l'échantillon. Un système afocal constitué des lentilles convergentes L20, L30 assure une relation de conjugaison optique entre la pupille de l'objectif et les miroirs oscillants.

Les faisceaux FR1, FR2, FR3 rétrodiffusés par l'échantillon E' traversent dans le sens opposé le système afocal L20, L30, sont réfléchis par la face avant FAV du miroir MOD pour compenser le balayage des faisceaux d'éclairage, sont refocalisés par la lentille L10 et réfléchis par la lame séparatrice LS'. Ils subissent ensuite un filtrage par une matrice de sténopés MP dont la fonction et le dimensionnement sont analogues à ceux du sténopé P2 de la [Fig. 1]. Deux lentilles convergentes L60, L50 formant un système afocal et deux miroirs M10, M20 (optionnels) permettent de diriger les faisceaux issus de la matrice de sténopés MP sur un second réseau de microlentilles convergentes RML2 qui focalisent les faisceaux en réduisant d'un facteur deux la taille de chaque point focal.. Après avoir traversé une autre lentille convergente L40, les faisceaux FR1 - FR3 sont réfléchis par la face arrière FAR du miroir résonnant MOD et par celle du miroir galvanométrique non représenté pour réaliser la réallocation de photons. L'effet combiné du système afocal L60, L50, de la lentille L40 et du réseau de microlentilles RML2 est de doubler la section de chaque faisceau signal au niveau du miroir résonnant MOD. Cela est nécessaire car l'amplitude du rebalayage est nécessairement égale à celle du balayage du faisceau d'éclairage.

Une dernière lentille convergente L70 focalise les faisceaux signaux sur le capteur matriciel d'image CMI. Le réseau de microlentilles RML2 a pour fonction de diviser par deux la section des points focaux des faisceaux signaux.

Les modes de réalisation des [Fig. 1] et [Fig. 8] mettent en œuvre la réallocation de photons par des moyens purement optiques, grâce à un balayage du faisceau signal synchrone avec celui du faisceau d'éclairage et ayant une amplitude appropriée (« re-scan » en anglais). Selon un mode de réalisation non revendiqué, il est également possible de réaliser la réallocation de photons au moyen d'un traitement numérique. Dans ce cas, la caméra CMI, dont la cadence d'acquisition est synchronisée avec le miroir oscillant MO1, est typiquement agencée au niveau du sténopé P2, qui peut être intégré à la caméra elle-même. Le traitement numérique - décrit par exemple dans (Mueller 2010) - est mis en œuvre par un processeur PNI qui reçoit en entrée les images acquises par la caméra CMI. Le troisième système optique SO3 peut être omis. Un microscope selon ce mode de réalisation est illustré sur la [Fig. 9]. La mise en œuvre numérique de la réallocation de photons peut aussi être appliquée à l'architecture parallèle de la [Fig. 8].

L'invention a été décrite en référence à deux modes de réalisation particuliers, mais elle ne s'y limite pas.

Par exemple, elle peut être adaptée au cas d'un microscope confocal à transmission. Dans ce cas il faut prévoir deux objectifs de microscope - un pour illuminer un point de l'échantillon et l'autre pour collecter la lumière transmise. En outre, le premier et le deuxième système optique doivent être complètement disjoints, ce qui nécessite plus de composants.

En général, le balayage de l'échantillon par le faisceau lumineux focalisé et le balayage de réallocation de photons seront bidimensionnels. Dans certains cas, cependant, un balayage dans une seule dimension pourra être suffisant, ce qui permettra de réduire le nombre de miroirs oscillants.

Le filtrage optique par la lentille L1 et le sténopé P1, ou par la matrice de microlentilles RML1 et la matrice de sténopés MP, n'est pas strictement nécessaire, pourvu que l'éclairage présente une cohérence spatiale suffisante (rapport de Strehl > 80%) ; dans le cas d'un système parallélisé tel que celui de la [Fig. 8], la cohérence s'entend à l'échelle de chaque faisceau élémentaire tandis qu'une cohérence globale n'est pas requise. De même, les relais optiques L3-L4 et L20-L30 ne sont pas indispensables en principe, mais leur présence est généralement requise pour assurer que le miroir oscillant MO1 ou MOD soit optiquement conjugué avec la pupille de l'objectif faute de quoi, aux grandes angles de déflexion, la pupille de l'objectif n'est pas totalement éclairée ce qui réduit l'ouverture numérique et donc la résolution spatiale. De même, l'utilisation d'un laser en tant que source d'éclairage n'est pas essentielle.

Au moins certaines lentilles pourraient ne pas être convergentes mais divergentes et/ou être remplacées par d'autres dispositifs de focalisation ou défocalisation, par exemple des miroirs concaves ou convexes.

La lame séparatrice LS pourrait, en principe, être remplacée par un cube séparateur, mais cela est désavantageux à cause des réflexions parasites que ce dernier composant introduirait.

D'une manière plus générale, d'autres montages optiques que ceux illustrés par la [Fig. 1] et la [Fig. 8] peuvent être utilisés pour réaliser les différents systèmes optiques constituant un microscope selon l'invention. Dans la description des figures, en outre, le dimensionnement des éléments optiques est donné uniquement à titre d'exemple.

La longueur d'onde d'illumination peut être quelconque, mais l'utilisation d'une lumière verte (495-570 nm), bleu (450 - 495 nm) ou violette (380 - 450 nm), voire dans l'ultraviolet proche (300-380) est préférée car elle permet d'obtenir une résolution spatiale latérale de l'ordre de 100 nm ou moins tout en évitant les difficultés techniques associées à l'utilisation de plus petites longueurs d'onde. De même, le choix d'un objectif de microscope à immersion de forte ouverture numérique (supérieure ou égale à 1) permet de maximiser la résolution spatiale, mais n'est pas essentiel en soi.

Enfin, la détection et identification de particules virales ne constitue qu'un exemple d'application d'un microscope parallélisé du type illustré sur la [Fig. 8].

Références

(Sheppard 1988) : C. J. R. Sheppard, « Super-resolution in Confocal Imaging », Optik 80, No. 2, pages 53, 54.

(York 2013) : A.G. York et al. « Instant super-resolution imaging in live cells and embryos via analog image processing », Nat. Methods 2013, Novembre, 10(11), pages 1122 - 1126.

(De Luca 2013) : G. M.R. De Luca « Re-scan confocal microscopy : scanning twice for better resolution » Biomedical Optics Express, Vol. 4, No. 11, Novembre 2013.

(Curd 2015) : A. Curd et al. « Construction of an instant structured illumination microscope », Methods 88 (2015) pages 37 - 47.

(Roth 2017) : S. Roth « Development of a new microscopy method : Optical Photon Reassignment Microscopy », thèse de doctorat, Université Friedrich-Schiller, Jena (DE), 29 mars 2017.

(DuBose 2019) : T. B. DuBose et al. « Super-resolution retinal imaging using optically reassigned scanning laser ophtalmology », Nature Photonics, Vol. 13, Avril 2019, pages 257 - 262.

(Sandison 1995) : D. R. Sandison et al. « Quantitative comparison of background rejection, signal-to-noise ratio, and resolution in confocal and full-field laser scanning microscopes » Applied Optics Vol. 34, No. 19, 1er juillet 1995, pages 3576 - 3588.

(Mueller 2010): C.B. Mueller, J. Enderlein « Image Scanning Microscopy », PRL 104, 198101 (2010).

**Revendications**

1. Microscope confocal à balayage avec réallocation de photons comprenant :

   - Une source de lumière (SL) configurée pour générer au moins un faisceau lumineux d'éclairage (FE) spatialement cohérent à une longueur d'onde d'éclairage;
   - Un premier système optique (SO1) configuré pour appliquer un balayage angulaire audit faisceau lumineux d'éclairage ;
   - Au moins un objectif de microscope (OM) configuré pour recevoir en entrée le faisceau lumineux d'éclairage en sortie du premier système optique et le focaliser sur un échantillon (E), et pour collecter et collimater un faisceau lumineux diffusé élastiquement (FR) par ledit échantillon, dit faisceau de signal ;
   - Un deuxième système optique (SO2), pouvant coïncider en tout ou en partie avec le premier système optique, configuré pour recevoir en entrée le faisceau signal collimaté par l'objectif de microscope, lui appliquer un balayage angulaire opposé à celui appliqué au faisceau lumineux d'éclairage et le focaliser dans un premier plan focal (PF1) ;

- Un sténopé (P2) agencé dans ledit premier plan focal ;
- Un troisième système optique (SO3) configuré pour collecter le faisceau signal ayant traversé le sténopé, le collimater et lui appliquer un balayage angulaire synchronisé avec celui appliqué au faisceau lumineux d'éclairage et tel que le produit de son amplitude par la section du faisceau lumineux collimaté dans le troisième système optique est plus grand que le produit de l'amplitude du balayage appliqué par le deuxième système optique par la section du faisceau lumineux collimaté dans le deuxième système optique, et le focaliser dans un deuxième plan focal ; et
- Un capteur matriciel d'images (CMI) agencé dans le deuxième plan focal (PF2) ;

**caractérisé en ce que** :

- L'ensemble constitué par l'objectif de microscope, le deuxième système optique et le troisième système optique, est configuré pour focaliser sur le capteur matriciel d'images ledit faisceau signal à la longueur d'onde d'éclairage ; et **en ce que** :

- Le sténopé présente un diamètre, ou une plus grande dimension latérale, compris entre 2 et 4 unités d'Airy.

2. Microscope confocal à balayage selon la revendication 1 dans lequel au moins le deuxième système optique comprend une lame séparatrice (LS) pour séparer le faisceau signal du faisceau lumineux d'éclairage.

3. Microscope confocal à balayage selon l'une quelconque des revendications précédentes dans lequel la source de lumière (SL) est adaptée pour émettre un faisceau lumineux d'éclairage bleu, violet ou dans l'ultraviolet proche.

4. Microscope confocal à balayage selon l'une quelconque des revendications précédentes dans lequel la source de lumière (SL) est un laser.

5. Microscope confocal à balayage selon l'une quelconque des revendications précédentes dans lequel l'objectif de microscope (OM) est un objectif à immersion présentent une ouverture numérique supérieure ou égale à 1.

6. Microscope confocal à balayage selon l'une quelconque des revendications précédentes dans lequel le troisième système optique est configuré pour appliquer au faisceau signal un balayage angulaire tel que l'amplitude dudit balayage multipliée par la section du faisceau est comprise entre 1,8 et 2,2 fois le produit de l'amplitude du balayage angulaire appliqué au faisceau lumineux d'éclairage par le premier système optique par la section dudit faisceau.

7. Microscope confocal à balayage selon l'une quelconque des revendications précédentes, configuré pour un fonctionnement en réflectance, dans lequel :

- Le premier système optique (SO1) comprend une première lentille (L1) pour focaliser le faisceau lumineux d'éclairage, un sténopé (P1) agencé dans le plan focal de ladite première lentille pour effectuer un filtrage spatial du faisceau lumineux d'éclairage, une lame séparatrice (LS) pour réfléchir une portion dudit faisceau, une deuxième lentille (L2) pour collimater ladite portion du faisceau d'éclairage, un premier miroir oscillant (MO1) ou système de miroirs oscillants pour lui appliquer ledit balayage angulaire et un système afocal comprenant une troisième (L3) et une quatrième (L4) lentille ;
- Le deuxième système optique comprend ledit système afocal (L3, L4), ledit premier miroir oscillant (MO1) ou système de miroirs oscillants, ladite deuxième lentille (L2) et ladite lame séparatrice (LS), cette dernière étant configurée pour transmettre une portion du faisceau signal, rétrodiffusé par l'échantillon ; et
- Le troisième système optique comprend une cinquième lentille (L5) pour collimater le faisceau signal ayant traversé le sténopé, un deuxième miroir oscillant (MO2) ou système de miroirs oscillants pour lui appliquer ledit balayage angulaire synchronisé avec celui appliqué au faisceau lumineux d'éclairage et une sixième lentille (L6) pour le focaliser dans le deuxième plan focal.

8. Microscope confocal à balayage selon l'une quelconque des revendications précédentes, dans lequel la source de lumière (SL') est configurée pour générer une pluralité de dits faisceaux lumineux d'éclairage en parallèle (FE1, FE2, FE3) se propageant à travers du premier système optique, moyennant quoi l'objectif de microscope collecte une pluralité de faisceaux signaux respectifs (FR1, FR2, FR3), qui se propageant ensuite le long dudit deuxième système optique, et comprenant une matrice de sténopés (MP) agencés dans ledit deuxième plan focal, un pour chaque dit faisceau lumineux rétrodiffusé.

**9.** Microscope confocal à balayage selon la revendication 8, configuré pour un fonctionnement en réflectance, dans lequel :

- La source de lumière (SL') comprend un premier réseau de microlentilles (RML1) pour générer et focaliser ladite pluralité de faisceaux lumineux d'éclairage;
- Le microscope confocal à balayage comprend au moins un miroir oscillant (MOD) présentant une face avant (FAV) et une face arrière (FAR) réfléchissantes, la face avant faisant partie du premier et du deuxième système optique et la face arrière faisant partie du troisième système optique ; et
- Le troisième système optique comprend un second réseau de microlentilles (RML2) pour augmenter la section des faisceaux lumineux rétrodiffusés incidents sur la face arrière du miroir oscillant d'un facteur compris entre 1,8 et 2,2.

**10.** Utilisation d'un microscope confocal à balayage selon l'une quelconque des revendications précédentes pour l'observation de particules virales (PV) en suspension.

**11.** Procédé d'observation d'un échantillon (E) comprenant les étapes consistant à

- Générer au moins un faisceau lumineux d'éclairage (FE) spatialement cohérent et collimaté à une longueur d'onde d'éclairage ;
- Lui appliquer un balayage angulaire ;
- Le focaliser sur l'échantillon (E) au moyen d'un objectif de microscope (OM);
- Collecter, au moyen dudit ou d'un autre objectif de microscope, un faisceau lumineux diffusé élastiquement (FR) par l'échantillon à ladite longueur d'onde d'éclairage, dit faisceau signal ;
- Appliquer au faisceau signal un balayage angulaire opposé à celui appliqué au faisceau lumineux d'éclairage et le focaliser dans un premier plan focal (PF1) ;
- Effectuer un filtrage spatial du faisceau signal au moyen d'un sténopé (P2) agencé dans ledit premier plan focal, le sténopé présentant un diamètre, ou une plus grande dimension latérale, compris entre 2 et 4 unités d'Airy ;
- Collecter le faisceau signal ayant traversé le sténopé, le collimater et lui appliquer un balayage angulaire synchronisé avec celui appliqué au faisceau lumineux d'éclairage et tel que le produit de son amplitude par la section du faisceau de signal est plus grand que le produit de l'amplitude du balayage angulaire appliqué au faisceau lumineux d'éclairage par son diamètre et le focaliser dans un deuxième plan focal (PF2) ; et
- Détecter le faisceau signal au moyen d'un capteur matriciel d'images agencé dans le deuxième plan focal.

**Patentansprüche**

**1.** Konfokales Rastermikroskop mit Photonenneuzuordnung, umfassend:

- eine Lichtquelle (SL), die so konfiguriert ist, dass sie mindestens einen räumlich kohärenten Beleuchtungslichtstrahl (FE) bei einer Beleuchtungswellenlänge erzeugt;
- ein erstes optisches System (SO1), das so konfiguriert ist, dass es einen Winkelscan auf den Beleuchtungslichtstrahl anwendet;
- mindestens ein Mikroskopobjektiv (OM), das so konfiguriert ist, dass es den Lichtstrahl vom Beleuchtungsausgang des ersten optischen Systems als Eingang empfängt und auf eine Probe (E) fokussiert, und einen von dieser Probe elastisch gestreuten Lichtstrahl (FR), den so genannten Signalstrahl, sammelt und kollimiert;
- ein zweites optisches System (SO2), das ganz oder teilweise mit dem ersten optischen System übereinstimmen kann, das so konfiguriert ist, dass es den vom Mikroskopobjektiv kollimierten Signalstrahl als Eingang empfängt, auf diesen einen Winkelscan anwendet, der dem des Beleuchtungslichtstrahls entgegengesetzt ist, und ihn in einer ersten Brennebene (PF1) fokussiert;
- eine Lochblende (P2), die in der ersten Brennebene angeordnet ist;
- ein drittes optisches System (SO3), das so konfiguriert ist, dass es den durch die Lochblende hindurchgetretenen Signalstrahl auffängt, ihn kollimiert und einen Winkelscan darauf anwendet, der mit dem auf den Beleuchtungsstrahl angewendeten Winkelscan synchronisiert ist, sodass das Produkt aus seiner Amplitude und dem Querschnitt des kollimierten Lichtstrahls im dritten optischen System größer ist als das Produkt aus der Amplitude des vom zweiten optischen System angewendeten Scans und dem Querschnitt des kollimierten

EP 4 260 116 B1

Lichtstrahls im zweiten optischen System, und ihn in eine zweite Brennebene fokussiert; und
- einen Matrixbildsensor (CMI), der in der zweiten Brennebene (PF2) angeordnet ist;

**dadurch gekennzeichnet, dass**:

- die aus dem Mikroskopobjektiv, dem zweiten optischen System und dem dritten optischen System bestehende Anordnung so konfiguriert ist, dass sie den Signalstrahl bei der Beleuchtungswellenlänge auf den Matrixbildsensor fokussiert;

und dadurch, dass:

- die Lochblende einen Durchmesser bzw. eine größere seitliche Abmessung zwischen 2 und 4 Airy-Einheiten aufweist.

2. Konfokales Rastermikroskop nach Anspruch 1, wobei mindestens das zweite optische System einen Strahlteiler (LS) zur Trennung des Signalstrahls vom Beleuchtungslichtstrahl umfasst.

3. Konfokales Rastermikroskop nach einem der vorstehenden Ansprüche, wobei die Lichtquelle (SL) so ausgelegt ist, dass sie einen blauen, violetten oder nahultravioletten Beleuchtungslichtstrahl aussendet.

4. Konfokales Rastermikroskop nach einem der vorstehenden Ansprüche, wobei die Lichtquelle (SL) ein Laser ist.

5. Konfokales Rastermikroskop nach einem der vorstehenden Ansprüche, wobei es sich bei dem Mikroskopobjektiv (OM) um ein Immersionsobjektiv, aufweisend eine numerische Apertur größer oder gleich 1 handelt.

6. Konfokales Rastermikroskop nach einem der vorstehenden Ansprüche, wobei das dritte optische System so konfiguriert ist, dass es auf den Signalstrahl einen Winkelscan anwendet, wobei die Amplitude dieses Scans multipliziert mit dem Querschnitt des Strahls das 1,8- bis 2,2-Fache des Produkts aus der Amplitude des vom ersten optischen System auf den Beleuchtungslichtstrahl angewendeten Winkelscans und dem Querschnitt dieses Strahls beträgt.

7. Konfokales Rastermikroskop nach einem der vorstehenden Ansprüche, das für den Reflexionsbetrieb konfiguriert ist, wobei:

- das erste optische System (SO1) eine erste Linse (L1) zum Fokussieren des Beleuchtungslichtstrahls, eine in der Brennebene der ersten Linse angeordnete Lochblende (P1) zur räumlichen Filterung des Beleuchtungslichtstrahls, einen Strahlteiler (LS) zum Reflektieren eines Anteils des Strahls, eine zweite Linse (L2) zum Kollimieren dieses Anteils des Beleuchtungsstrahls, einen ersten oszillierenden Spiegel (MO1) oder ein System von oszillierenden Spiegeln zum Anwenden des Winkelscans darauf, und ein afokales System mit einer dritten (L3) und einer vierten (L4) Linse umfasst;
- das zweite optische System das afokale System (L3, L4), den ersten oszillierenden Spiegel (MO1) bzw. das erste oszillierende Spiegelsystem, die zweite Linse (L2) und den Strahlteiler (LS) umfasst, wobei letzterer so konfiguriert ist, dass er einen Anteil des von der Probe rückgestreuten Signalstrahls durchlässt; und
- das dritte optische System eine fünfte Linse (L5) zum Kollimieren des durch die Lochblende hindurchgetretenen Signalstrahls, einen zweiten oszillierenden Spiegel (MO2) oder ein System von oszillierenden Spiegeln, um darauf den Winkelscan anzuwenden, der mit demjenigen synchronisiert ist, der auf den Beleuchtungslichtstrahl angewendet wird, und eine sechste Linse (L6) zum Fokussieren von diesem in der zweiten Brennebene umfasst.

8. Konfokales Rastermikroskop nach einem der vorstehenden Ansprüche, wobei die Lichtquelle (SL') so konfiguriert ist, dass sie eine Vielzahl von parallelen Beleuchtungslichtstrahlen (FE1, FE2, FE3) erzeugt, die sich durch das erste optische System ausbreiten, wodurch das Mikroskopobjektiv eine Vielzahl von entsprechenden Signalstrahlen (FR1, FR2, FR3), einen für jeden der rückgestreuten Lichtstrahlen, sammelt, die sich dann entlang des zweiten optischen Systems ausbreiten, und umfassend eine in der zweiten Brennebene angeordnete Lochblendenmatrix (MP).

9. Konfokales Rastermikroskop nach Anspruch 8, das für den Reflexionsbetrieb konfiguriert ist, wobei:

- die Lichtquelle (SL') ein erstes Mikrolinsenarray (RML1) zum Erzeugen und Fokussieren der genannten Vielzahl von Lichtstrahlen zur Beleuchtung umfasst;

14

- das konfokale Rastermikroskop mindestens einen oszillierenden Spiegel (MOD), aufweisend eine reflektierende Vorderseite (FAV) und Rückseite (FAR) umfasst, wobei die Vorderseite Teil des ersten und des zweiten optischen Systems ist und die Rückseite Teil des dritten optischen Systems ist; und
- das dritte optische System ein zweites Mikrolinsenarray (RML2) umfasst, um den Querschnitt der auf die Rückseite des oszillierenden Spiegels auftreffenden rückgestreuten Lichtstrahlen um einen Faktor zwischen 1,8 und 2,2 zu erhöhen.

10. Verwendung eines konfokalen Rastermikroskops nach einem der vorstehenden Ansprüche zur Beobachtung von Viruspartikeln (PV) in Suspension.

11. Verfahren zur Beobachtung einer Probe (E), umfassend die Schritte:

- Erzeugen von mindestens einem räumlich kohärenten und kollimierten Beleuchtungslichtstrahl (FE) bei einer Beleuchtungswellenlänge;
- Anwenden eines Winkelscans auf diesen;
- Fokussieren von diesem auf die Probe (E) mit einem Mikroskopobjektiv (OM);
- Sammeln, mit Hilfe dieses oder eines anderen Mikroskopobjektivs, eines Lichtstrahls, der von der Probe bei der genannten Beleuchtungswellenlänge elastisch gestreut wird (FR), des so genannten Signalstrahls;
- Anwenden eines dem Winkelscan des Beleuchtungsstrahls entgegengesetzten Winkelscans auf den Signalstrahl, und Fokussieren von diesem in einer ersten Brennebene (PF1);
- Durchführen einer räumlichen Filterung des Signalstrahls mittels einer Lochblende (P2), die in der ersten Brennebene angeordnet ist, wobei die Lochblende einen Durchmesser oder eine größere laterale Abmessung aufweist, die zwischen 2 und 4 Airy-Einheiten liegt;
- Sammeln des durch die Lochblende hindurchgetretenen Signalstrahls, Kollimieren von diesem und Anwenden eines Winkelscans, der mit dem des Beleuchtungsstrahls synchronisiert ist, sodass das Produkt aus seiner Amplitude und dem Querschnitt des Signalstrahls größer ist als das Produkt aus der Amplitude des auf den Beleuchtungsstrahl angewendeten Winkelscans und seinem Durchmesser, und Fokussieren von diesem in einer zweiten Brennebene (PF2); und
- Detektieren des Signalstrahls mittels eines in der zweiten Brennebene angeordneten Matrixbildsensors.

## Claims

1. A scanning confocal photon-reassignment microscope comprising:

a light source (SL) configured to generate at least one spatially coherent illuminating light beam (FE) at an illumination wavelength;
a first optical system (SO1) configured to apply an angular scan to said illuminating light beam;
at least one microscope objective (OM) configured to receive as input the illuminating light beam output from the first optical system and to focus it on a sample (E), and to collect and collimate a light beam (FR) elastically scattered by said sample, called the signal beam;
a second optical system (SO2), which is able to coincide in whole or in part with the first optical system, and which is configured to receive as input the signal beam collimated by the microscope objective, to apply to it an angular scan opposite to that applied to the illuminating light beam and to focus it in a first focal plane (PF1);
a pinhole (P2) arranged in said first focal plane;
a third optical system (SO3) configured to collect the signal beam having passed through the pinhole, to collimate it and to apply to it an angular scan synchronized with that applied to the illuminating light beam and such that the product of its amplitude and the cross-sectional area of the collimated light beam in the third optical system is greater than the product of the amplitude of the scan applied by the second optical system and the cross-sectional area of the collimated light beam in the second optical system, and to focus it in a second focal plane; and
a matrix image sensor (CMI) arranged in the second focal plane (PF2);

**characterized in that**:

the assembly consisting of the microscope objective, the second optical system and the third optical system is configured to focus on the matrix image sensor said signal beam at the illumination wavelength; and **in that** the pinhole has a diameter, or greatest lateral dimension, of between 2 and 4 Airy units.

2. The scanning confocal microscope as claimed in claim 1,
   wherein at least the second optical system comprises a beam splitter (LS) to split the signal beam from the illuminating light beam.

3. The scanning confocal microscope as claimed in either one of the preceding claims, wherein the light source (SL) is configured to emit a blue, violet or near-ultraviolet illuminating light beam.

4. The scanning confocal microscope as claimed in any one of the preceding claims, wherein the light source (SL) is a laser.

5. The scanning confocal microscope as claimed in any one of the preceding claims, wherein the microscope objective (OM) is an immersion objective having a numerical aperture greater than or equal to 1.

6. The scanning confocal microscope as claimed in any one of the preceding claims, wherein the third optical system is configured to apply to the signal beam an angular scan such that the amplitude of said scan multiplied by the cross-sectional area of the beam is between 1.8 and 2.2 times the product of the amplitude of the angular scan applied to the illuminating light beam by the first optical system and the cross-sectional area of said beam.

7. The scanning confocal microscope as claimed in any one of the preceding claims, configured to operate in reflectance, wherein:

   - the first optical system (SO1) comprises a first lens (L1) to focus the illuminating light beam, a pinhole (P1) arranged in the focal plane of said first lens to perform spatial filtering of the illuminating light beam, a beam splitter (LS) to reflect a portion of said beam, a second lens (L2) to collimate said portion of the illuminating beam, a first oscillating mirror (MO1) or system of oscillating mirrors to apply to it said angular scan and an afocal system comprising a third (L3) and a fourth (L4) lens;
   - the second optical system comprises said afocal system (L3, L4), said first oscillating mirror (MO1) or system of oscillating mirrors, said second lens (L2) and said beam splitter (LS), the latter being configured to transmit a portion of the signal beam, backscattered by the sample; and
   - the third optical system comprises a fifth lens (L5) to collimate the signal beam having passed through the pinhole, a second oscillating mirror (MO2) or system of oscillating mirrors to apply to it said angular scan synchronized with that applied to the illuminating light beam and a sixth lens (L6) to focus it in the second focal plane.

8. The scanning confocal microscope as claimed in any one of the preceding claims, wherein the light source (SL') is configured to generate a plurality of said illuminating light beams (FE1, FE2, FE3) in parallel, these propagating through the first optical system, whereby the microscope objective collects a plurality of respective signal beams (FR1, FR2, FR3), which then propagate along said second optical system, and comprising a matrix array of pinholes (MP) arranged in said second focal plane, one for each said backscattered light beam.

9. The scanning confocal microscope as claimed in claim 8, configured to operate in reflectance, wherein:

   the light source (SL') comprises a first array of microlenses (RML1) to generate and focus said plurality of illuminating light beams;
   the scanning confocal microscope comprises at least one oscillating mirror (MOD) having a reflective front face (FAV) and a reflective rear face (FAR), the front face forming part of the first and second optical system and the rear face forming part of the third optical system; and
   the third optical system comprises a second array of microlenses (RML2) to increase the cross-sectional area of the backscattered light beams incident on the rear face of the oscillating mirror by a factor between 1.8 and 2.2.

10. The use of a scanning confocal microscope as claimed in any one of the preceding claims to observe viral particles (PV) in suspension.

11. A method for observing a sample (E), comprising the steps of:

    generating at least one spatially coherent and collimated illuminating light beam (FE) at an illumination wavelength;
    applying to it an angular scan;

focusing it on the sample (E) by means of a microscope objective (OM);

collecting, by means of said or of another microscope objective, a light beam (FR) elastically scattered by the sample at said illumination wavelength, called the signal beam;

applying to the signal beam an angular scan opposite to that applied to the illuminating light beam and focusing it in a first focal plane (PF1);

carrying out spatial filtering of the signal beam by means of a pinhole (P2) arranged in said first focal plane, the pinhole having a diameter, or a greatest lateral dimension, of between 2 and 4 Airy units;

collecting the signal beam having passed through the pinhole, collimating it and applying to it an angular scan synchronized with that applied to the illuminating light beam and such that the product of its amplitude and the cross-sectional area of the signal beam is greater than the product of the amplitude of the angular scan applied to the illuminating light beam and its diameter and focusing it in a second focal plane (PF2); and

detecting the signal beam by means of a matrix image sensor arranged in the second focal plane.

**Fig. 1**

**Fig. 2**

**Fig. 3**

Fig. 4

200 nm

Fig. 5

**Fig. 6**

**Fig. 7**

**Fig. 8**

**Fig. 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **C. J. R. SHEPPARD**. Super-resolution in Confocal Imaging. *Optik*, vol. 80 (2), 53, 54
- **A.G. YORK et al.** Instant super-resolution imaging in live cells and embryos via analog image processing. *Nat. Methods*, November 2013, vol. 10 (11), 1122-1126
- **G. M.R. DE LUCA**. Re-scan confocal microscopy : scanning twice for better resolution. *Biomedical Optics Express*, November 2013, vol. 4 (11)
- **A. CURD et al.** Construction of an instant structured illumination microscope. *Methods*, 2015, vol. 88, 37-47
- **S. ROTH**. Development of a new microscopy method : Optical Photon Reassignment Microscopy. Université Friedrich-Schiller, 29 March 2017
- **T. B. DUBOSE et al.** Super-resolution retinal imaging using optically reassigned scanning laser ophtalmology. *Nature Photonics*, April 2019, vol. 13, 257-262
- **D. R. SANDISON et al.** Quantitative comparison of background rejection, signal-to-noise ratio, and resolution in confocal and full-field laser scanning microscopes. *Applied Optics*, 01 July 1995, vol. 34 (19), 3576-3588
- **C.B. MUELLER** ; **J. ENDERLEIN**. Image Scanning Microscopy. *PRL*, 2010, vol. 104, 198101